# FASCICULE DE BREVET EUROPEEN

(11) **EP 4 409 663 B1**
(45) Date de publication et mention de la délivrance du brevet: **05.11.2025**
(21) Numéro de dépôt: 22789966.3
(22) Date de dépôt: 27.09.2022
(51) Int. Cl.: H01M 8/021, H01M 8/0228, H01M 8/026, H01M 8/0265, H01M 8/18, H01M 8/2432, H01M 8/2484, H01M 8/2483, H01M 8/00, C25B 1/042, C25B 9/75, C25B 9/77, H01M 8/12, H01M 8/0217

(54) **INTERCONNECTEUR POUR EMPILEMENT DE CELLULES À OXYDES SOLIDES DE TYPE SOEC/SOFC COMPORTANT DES LANGUETTES DE GÉOMÉTRIE OPTIMISÉE**
INTERKONNEKTOR FÜR EINEN STAPEL VON FESTEN SOEC/SOFC-OXIDZELLEN MIT LASCHEN MIT OPTIMIERTER GEOMETRIE
INTERCONNECTOR FOR A STACK OF SOLID SOEC/SOFC-TYPE OXIDE CELLS HAVING TABS WITH OPTIMISED GEOMETRY

(30) Priorité: 29.09.2021 FR 2110285
(43) Date de publication de la demande: 07.08.2024
(73) Titulaire: Commissariat à l'Energie Atomique et aux Energies Alternatives, 75015 Paris (FR)
(72) Inventeur: DI IORIO, Stéphane, 38054 GRENOBLE CEDEX 09 (FR); ELIE, Manon, 38054 GRENOBLE CEDEX 09 (FR); SZYNAL, Philippe, 38054 GRENOBLE CEDEX 09 (FR)
(74) Mandataire: Brevalex
(86) Numéro de dépôt international: PCT/FR2022/051815
(87) Numéro de publication internationale: WO 2023/052722

(56) Documents cités:
- EP-A1- 3 370 290
- FR-A1- 3 016 084
- FR-A1- 3 066 201
- US-A1- 2014 147 692
- US-A1- 2020 266 455

## Description

### DOMAINE TECHNIQUE

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de la vapeur d'eau et du dioxyde de carbone (CO₂) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements de cellules à oxydes solides de type SOEC/SOFC fonctionnant à haute température.

Plus précisément, l'invention concerne un interconnecteur pour empilement de cellules à oxydes solides de type SOEC/SOFC comportant des languettes dans des lumières d'une plaque centrale constituant l'interconnecteur avec une géométrie optimisée, et un empilement de cellules à oxydes solides de type SOEC/SOFC comprenant une pluralité de tels interconnecteurs.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) ou d'autres combustibles tels que le méthane (CH₄), le gaz naturel, le biogaz, et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone (CO₂), voire encore de la co-électrolyse de la vapeur d'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de la vapeur d'eau à haute température (EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion souvent en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et vapeur d'eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le combustible, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

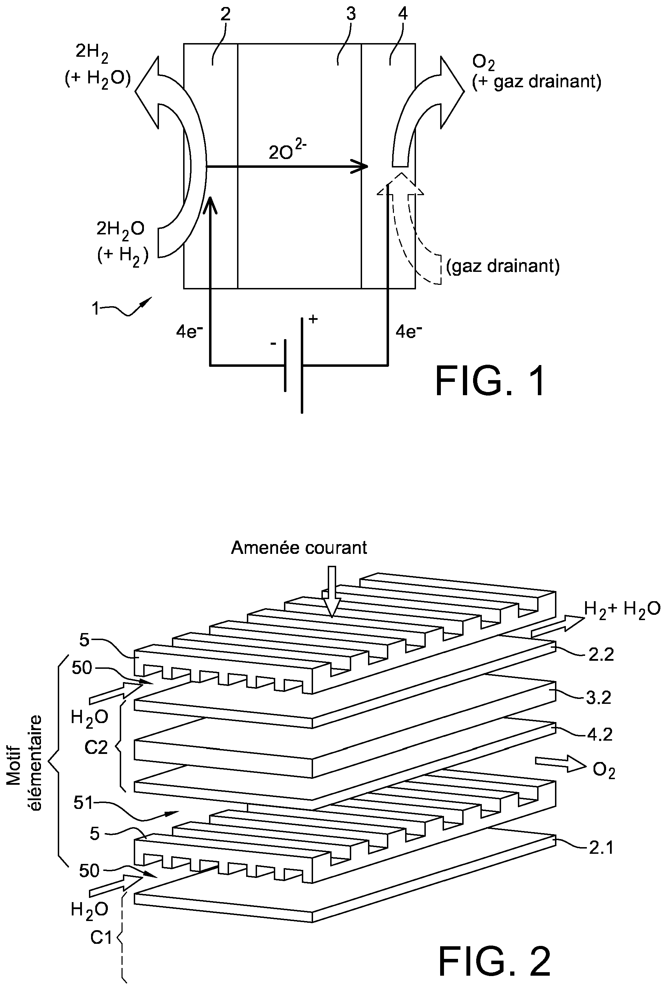

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est typiquement un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements de cellules à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

Pour parvenir à augmenter l'efficacité de production et obtenir une bonne homogénéité de fonctionnement des empilements de cellules à oxydes solides de type SOEC/SOFC fonctionnant à haute température, le rôle des interconnecteurs est essentiel, en particulier pour obtenir de bons contacts électriques entre les différentes parties des empilements et permettre également la bonne distribution des gaz au sein des cellules électrochimiques. Les interconnecteurs peuvent être métalliques et composés de trois plaques fines, comme décrit dans la demande de brevet français FR 3 024 985 A1.

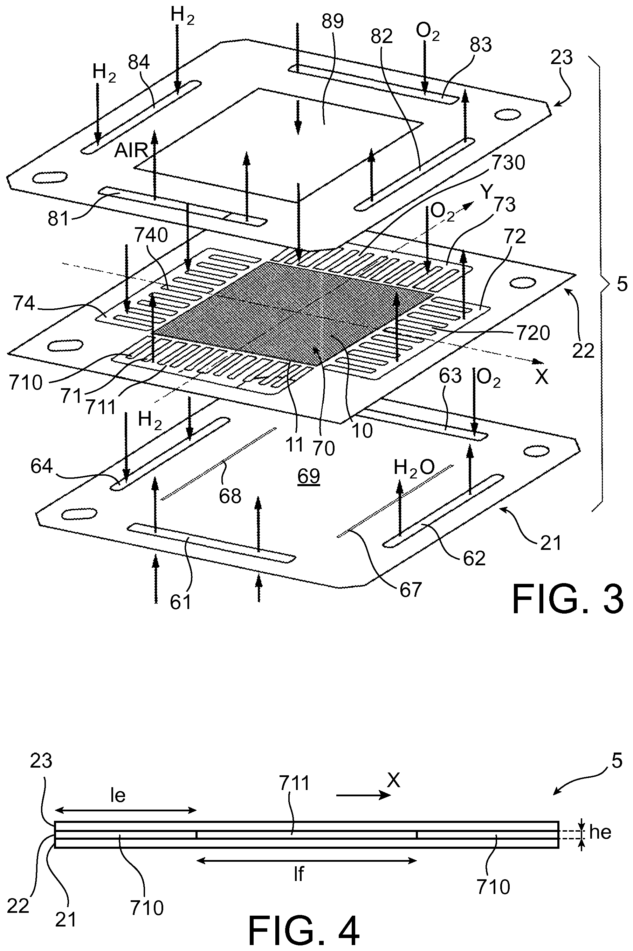

La figure 3 représente ainsi, selon une vue éclatée, un exemple d'interconnecteur 5 selon l'art antérieur formé par l'assemblage de trois tôles 21 à 23 fines métalliques assemblées et stratifiées.

Les trois tôles 21, 22, 23 sont allongées selon deux axes de symétrie X et Y orthogonaux entre eux, les tôles étant stratifiées et assemblées entre elles par soudure. Une tôle centrale 22 est intercalée entre une première tôle d'extrémité 21 et une deuxième tôle d'extrémité 23.

La tôle centrale 22 comporte une partie centrale 70 emboutie définissant des éléments en relief 10, ou emboutis, et est percée à la périphérie de sa partie centrale 70, de quatre lumières 71, 72, 73, 74. Par « lumière », on entend un trou débouchant de part et d'autre d'une tôle métallique.

L'une des tôles planes d'extrémité 21 comporte une partie centrale plane 69 et est percée, à la périphérie de sa partie centrale 69, de quatre lumières 61, 62, 63, 64. La première tôle d'extrémité 21 comporte en outre deux fentes 67, 68, lumières agencées symétriquement de part et d'autre de l'axe Y. Elles sont allongées sur une longueur correspondant sensiblement à la longueur de la partie centrale 69 selon l'axe Y.

L'autre des tôles planes d'extrémité 23 comporte une partie centrale 89 évidée et percée, à la périphérie de sa partie centrale 89, de quatre lumières 81, 82, 83, 84.

Les lumières 61, 71, 81, 63, 73, 83 de chaque tôle sont allongées sur une longueur correspondant sensiblement à la longueur de la partie centrale 69, 70, 89 selon l'axe X, tandis que les lumières 62, 72, 82, 64, 74, 84 de chaque tôle sont allongées sur une longueur correspondant sensiblement à la longueur de la partie centrale 69, 70, 89 selon l'axe Y.

Les lumières 71 à 74 de la tôle centrale 22 sont élargies respectivement par rapport aux lumières 61, 81, 62, 82, 63, 83, 64, 84, et elles comportent dans leur partie élargie des languettes de tôle 710, 720, 730, 740 espacées les unes des autres en formant un peigne. Chacune des fentes 711, définie entre le bord de la lumière élargie 71 et une languette 710 ou entre deux languettes successives 710 débouche sur les canaux 11 définis par les reliefs 10 ou emboutis. Il en va de même pour les fentes réalisées du côté des lumières 72, 73, 74.

Les tôles 21, 22, 23 sont typiquement en acier ferritique avec de l'ordre de 20 % de chrome, de préférence en CROFER^{®} 22APU ou le FT18TNb, à base Nickel de type Inconel^{®} 600 ou Haynes^{®} dans des épaisseurs typiquement comprises entre 0,1 et 1 mm.

Ces interconnecteurs peuvent être en outre comme décrit dans la demande de brevet français FR 2 996 065 A1. Dans cette demande, l'interconnecteur correspond à un composant à substrat en alliage métallique, dont l'élément de base est du Fer (Fe) ou du Nickel (Ni), avec une des faces planes principales revêtue d'une couche épaisse métallique ou en céramique, rainurée en délimitant des canaux adaptés pour la distribution et/ou la collecte de gaz, tels que vapeur d'eau H₂O, H₂ ; O₂, gaz drainant. En particulier, une couche de contact épaisse en céramique à base de manganite de lanthane dopée strontium peut être prévue du côté de l'électrode à oxygène (anode en EHT, cathode pour une pile SOFC). Par « couche épaisse », on entend une couche dont l'épaisseur est supérieure à celle d'une couche obtenue par une technologie dite « couche mince », typiquement une épaisseur comprise entre 2 et 15 µm. On obtient ainsi de bonnes performances avec une bonne homogénéité dans les empilements de cellules à oxydes solides de type SOFC/SOEC avec de faibles coûts de réalisation.

Néanmoins, des besoins existent encore pour optimiser de tels interconnecteurs, en particulier d'un point de vue fluidique et mécanique, et notamment parvenir à diminuer les pertes de charges apparaissant lors du passage des gaz.

Par ailleurs, les documents FR 3 066 201 A1, FR 3 016 084 A1, US2014/147692A1, EP 3 370 290 A1 et US 2020/266455 A1 décrivent des exemples d'interconnecteurs pour empilement de cellules électrochimiques.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception optimisée d'interconnecteur pour empilements de cellules à oxydes solides de type SOEC/SOFC, en particulier par le biais d'une modification des languettes de peignes et éventuellement d'un usinage spécifique d'une couche de contact de l'interconnecteur permettant d'obtenir, pour un serrage donné, une conductivité électrique de l'interconnecteur élevée et un bon contact mécanique et électrique, tout en abaissant les pertes de charge pour le passage des gaz.

L'invention a ainsi pour objet, selon l'un de ses aspects, un interconnecteur pour un empilement de cellules à oxydes solides de type SOEC/SOFC fonctionnant à haute température, destiné à être agencé entre deux cellules électrochimiques adjacentes de l'empilement, chaque cellule électrochimique étant formée d'une cathode, d'une anode et d'un électrolyte intercalé entre la cathode et l'anode, l'interconnecteur étant formé par l'assemblage d'au moins trois plaques allongées selon un premier axe de symétrie et un deuxième axe de symétrie orthogonaux entre eux, une plaque centrale étant intercalée entre une première plaque d'extrémité et une deuxième plaque d'extrémité, la plaque centrale comportant une partie centrale et, à sa périphérie, au moins deux lumières allongées sur une longueur correspondant sensiblement à la longueur de la partie centrale selon le premier axe de symétrie et deux lumières allongées sur une longueur correspondant sensiblement à la longueur de la partie centrale selon le deuxième axe de symétrie, chaque lumière comportant des languettes espacées les unes des autres pour former un peigne et des fentes définies entre le bord d'une lumière et une languette ou entre deux languettes successives,
caractérisé en ce que la largeur de chaque languette d'au moins une lumière est comprise entre 0,1 mm et 3 mm, notamment de l'ordre de 1 mm.

L'interconnecteur selon l'invention peut en outre comporter l'une ou plusieurs des caractéristiques suivantes prises isolément ou suivant toutes combinaisons techniques possibles.

La largeur de chaque fente d'au moins une lumière peut être comprise entre 3 et 5 mm, notamment de l'ordre de 4,9 mm.

De plus, la hauteur de chaque languette d'au moins une lumière peut être comprise entre 0,25 et 1 mm, notamment de l'ordre de 0,3 mm.

Par ailleurs, selon un aspect de l'invention, l'interconnecteur, notamment la partie centrale de la plaque centrale, peut comporter une face plane sur laquelle sont formés au moins un premier groupe de premiers éléments identiques en relief par rapport à la face plane et un deuxième groupe de deuxièmes éléments identiques en relief par rapport à la face plane,
les premiers éléments en relief présentant des caractéristiques géométriques différentes par rapport aux deuxièmes éléments en relief,
la hauteur de chaque premier élément en relief, mesurée comme étant la plus grande dimension verticale du premier élément en relief par rapport à la face plane, étant différente de la hauteur de chaque deuxième élément en relief, mesurée comme étant la plus grande dimension verticale du deuxième élément en relief,
la largeur de contact de chaque premier élément en relief, mesurée comme étant la plus grande dimension horizontale par rapport à la face plane de l'extrémité externe de contact de chaque premier élément en relief, opposée à l'extrémité interne au contact de la face plane et destinée à être au contact d'une cellule électrochimique, étant différente de la largeur de contact de chaque deuxième élément en relief, mesurée comme étant la plus grande dimension horizontale par rapport à la face plane de l'extrémité externe de contact de chaque deuxième élément en relief, opposée à l'extrémité interne au contact de la face plane et destinée à être au contact d'une cellule électrochimique.

En outre, les premiers éléments en relief peuvent présenter une largeur de contact supérieure à la largeur de contact des deuxièmes éléments en relief, et les premiers éléments en relief peuvent être situés au droit des languettes d'au moins une lumière et les deuxièmes éléments en relief peuvent être situés au droit des fentes de ladite au moins une lumière.

De plus, la largeur de contact des premiers éléments en relief peut avantageusement être égale à la largeur des languettes de ladite au moins une lumière.

La largeur de contact de chaque premier élément en relief peut être comprise entre 0,5 et 5 mm, préférentiellement égale à 1 mm.

La largeur de contact de chaque deuxième élément en relief peut être comprise entre 0,005 mm et 0,5 mm, préférentiellement égale à 100 µm.

La hauteur de chaque premier élément en relief peut être comprise entre 200 µm et 1000 µm, préférentiellement égale à 350 µm.

La hauteur de chaque deuxième élément en relief peut être comprise entre 250 µm et 1050 µm, préférentiellement égale à 400 µm.

La différence entre la hauteur de chaque deuxième élément en relief et la hauteur de chaque premier élément en relief peut être comprise entre 5 µm et 500 µm, préférentiellement de l'ordre de 50 µm.

Par ailleurs, l'interconnecteur peut comporter un nombre N, N étant un nombre entier supérieur ou égal à 2, de préférence compris entre 2 et 50, de préférence encore égal à 5, de groupes d'éléments en relief, formés sur la face plane, les éléments en relief d'un même groupe étant tous identiques, et les éléments en relief de groupes différents présentant des caractéristiques géométriques différentes, à savoir des hauteurs différentes et des largeurs de contact différentes.

Les éléments en relief peuvent se présenter sous la forme de dents ou rainures, disposées parallèlement entre elles, les espaces entre les éléments en relief formant des canaux de circulation des gaz.

Les éléments en relief peuvent encore se présenter sous la forme de plots, notamment de forme cylindrique, les espaces entre les éléments en relief formant un unique canal en serpentin de circulation des gaz. D'autres formes sont également possibles, par exemple une forme parallélépipédique.

En outre, les éléments en relief peuvent être répartis de façon régulière sur la face plane, étant notamment espacés entre eux d'une même distance, notamment comprise entre 50 µm et 5 mm, préférentiellement égale à 750 µm, selon au moins une direction horizontale sur la face plane.

Au moins une zone de la face plane, notamment une zone centrale, peut être dépourvue d'éléments en relief.

De plus, les éléments en relief présentant la largeur la plus importante peuvent être situés en périphérie de la face plane, à distance des autres éléments en relief et du ou des canaux de circulation des gaz formés par les espaces entre les autres éléments en relief.

L'interconnecteur peut comporter un substrat en alliage métallique, notamment de type chromino-formeur dont l'élément de base est du Fer ou du Nickel, en particulier des aciers ferritiques de type K41 d'Uginox^{®} ou de type Crofer de VDM^{®}, présentant deux faces planes principales, l'une des faces planes principales comprenant une première couche de revêtement formant première couche de contact avec une cellule électrochimique, l'autre des faces planes principales comprenant une deuxième couche de revêtement formant deuxième couche de contact avec une cellule électrochimique, la première couche de revêtement et/ou la deuxième couche de revêtement comprenant une face plane et des éléments en relief formés sur celle-ci, notamment par usinage.

La première couche de revêtement peut être une couche de revêtement épaisse en céramique, poreuse ou non, le matériau en céramique étant notamment choisi parmi un manganite de lanthane de formule La₁₋ₓSrₓMO₃ avec M (métaux de transition) = Nickel (Ni), Fer (Fe), Cobalt (Co), Manganèse (Mn), Chrome(Cr), seul ou en mélange, ou des matériaux de structure lamellaire tels que les nickelâtes de lanthanide de formule Ln₂NiO₄ (Ln = Lanthane (La), Néodyme (Nd), Praséodyme (Pr)), ou un autre oxyde pérovskite conducteur électrique.

La deuxième couche de revêtement peut être une couche de revêtement épaisse métallique, notamment de type grille ou de matériau dense, le matériau métallique étant notamment choisi parmi le Nickel (Ni) et ses alliages ou les alliages chromino-formeurs dont l'élément de base est le Fer (Fe), en particulier des aciers ferritiques de type K41 d'Uginox^{®} ou de type Crofer de VDM^{®}.

Par ailleurs, l'invention a encore pour objet, selon un autre de ses aspects, un empilement de cellules à oxydes solides de type SOEC/SOFC fonctionnant à haute température, comportant une pluralité de cellules électrochimiques formées chacune d'une cathode, d'une anode et d'un électrolyte intercalé entre la cathode et l'anode, et une pluralité d'interconnecteurs tels que définis précédemment, agencés chacun entre deux cellules électrochimiques adjacentes.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] est une vue schématique montrant le principe de fonctionnement d'un électrolyseur à oxydes solides à haute température (SOEC),
[Fig. 2] est une vue schématique éclatée d'une partie d'un électrolyseur à oxydes solides à haute température (SOEC) comprenant des interconnecteurs selon l'art antérieur,
[Fig. 3] est une vue éclatée d'un interconnecteur pour empilement de cellules à oxydes solides de type SOEC/SOFC haute température, correspondant à l'assemblage de trois tôles ou plaques fines,
[Fig. 4] est une vue en coupe partielle d'un interconnecteur 5 selon l'art antérieur constitué de trois tôles ou plaques fines, la tôle centrale comportant des languettes,
[Fig. 5] est une vue schématique de face d'un interconnecteur selon l'art antérieur d'un empilement d'électrolyse à haute température (SOEC) ou de pile à combustible (SOFC) fonctionnant à haute température,
[Fig. 5A] est une vue de détails en coupe d'un interconnecteur selon [Fig. 5],
[Fig. 5B] est une vue analogue à [Fig. 5] montrant les lignes de courant parcourant l'interconnecteur,
[Fig. 6] illustre, selon une vue en perspective partielle, un exemple d'interconnecteur conforme à l'invention comprenant des languettes de géométrie optimisée et des éléments en relief,
[Fig. 7] illustre, sous forme graphique, la hauteur, exprimée en mm, des dents d'un interconnecteur en fonction de la longueur, exprimée en mm, pour une configuration avant serrage et une configuration après serrage d'un empilement d'électrolyse à haute température (SOEC) ou de pile à combustible (SOFC) à haute température,
[Fig. 8] représente, graphiquement, les courbes de polarisation pour trois configurations différentes avec deux géométries de dents différentes et deux forces de serrage différentes,
[Fig. 9] est une vue en coupe de deux dents et d'un canal d'un interconnecteur classique d'un empilement de cellules à oxydes solides de type SOEC/SOFC haute température,
[Fig. 10] est une vue en coupe de cinq dents et de quatre canaux d'un interconnecteur pour un empilement de cellules à oxydes solides de type SOEC/SOFC haute température, avant serrage,
[Fig. 11] est une vue en coupe de la configuration de [Fig. 9], après serrage,
[Fig. 12] est une vue de dessus de la configuration de [Fig. 10] et [Fig. 11],
[Fig. 13] est une vue en perspective partielle d'un interconnecteur conforme à l'invention comprenant des languettes de géométrie optimisée avec un positionnement optimisé par rapport aux éléments en relief,
[Fig. 14] est une variante de réalisation de la configuration de [Fig. 10],
[Fig. 15] est une vue de dessus de la configuration de [Fig. 14],
[Fig. 16] est une variante de réalisation de la configuration de [Fig. 15],
[Fig. 17] est une variante de réalisation géométrique de la configuration de [Fig. 10],
[Fig. 18] est une variante de réalisation de la configuration de [Fig. 17], et
[Fig. 19] représente, en perspective et par observation du dessus, un ensemble comprenant un empilement de cellules à oxydes solides de type SOEC/SOFC avec des interconnecteurs conformes à l'invention et un système de serrage de l'empilement.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

Un interconnecteur 5 selon l'art antérieur a déjà été décrit précédemment en référence à la figure 3. Les éléments identiques ne seront pas décrits de nouveau mais restent dans le cadre de l'invention.

La figure 4 illustre, selon une coupe partielle, un tel interconnecteur 5 comprenant les trois tôles 21, 22 et 23, la coupe étant réalisée partiellement au niveau des languettes 710 et fentes 711 de la lumière 71 pour visualiser les dimensions de celles-ci. Bien entendu, celles-ci sont analogues pour les lumières 72, 73, 74.

Ainsi, dans une configuration standard, la largeur lₑ, mesurée selon l'axe X, d'une languette 710 est de l'ordre de 4 mm. De plus, la largeur l_{f} d'une fente 711, mesurée selon l'axe X, est de l'ordre de 6,4 mm. La hauteur hₑ de chaque languette 710, mesurée perpendiculairement à l'axe X, est de l'ordre de 0,2 mm. Par ailleurs, la largeur totale de la lumière 71 est de l'ordre de 100 mm, mais elle pourrait être plus importante.

Pour un débit d'air de l'ordre de 12 Nl/min/cellule/cm², la perte de charge due aux languettes 710 est de l'ordre de 50 mbars. Dans cette configuration, la perte de charge provient d'un volume de passage limité et également de la tendance à l'écrasement des canaux 11. Cet écrasement se produit lorsque la plaque 23, ou tôle, se déforme et se rapproche de la plaque centrale 22.

Afin d'optimiser la géométrie des languettes 710 et des fentes 711, conformément à l'invention, la largeur lₑ des languettes 710 est comprise entre 0,1 mm et 3 mm. Ainsi, la largeur lₑ de chaque languette 710 est réduite pour dégager un volume supérieur de canaux 11. Préférentiellement, la largeur lₑ des languettes 710 est de l'ordre de 1 mm, ce qui constitue un optimum entre difficulté de réalisation et gain de volume de passage de gaz.

En outre, conformément à l'invention, la largeur l_{f} de chaque fente 711 est comprise entre 3 et 5 mm, avec une valeur préférentielle de l'ordre de 4,9 mm qui est un optimum pour avoir un affaissement réduit sans avoir à trop baisser le volume des canaux 11 pour les gaz.

Par ailleurs, conformément à l'invention, la hauteur hₑ de chaque languette 710 est augmentée en utilisant une tôle centrale 22 présentant une hauteur supérieure à la hauteur standard de 0,2 mm. Ainsi, la hauteur hₑ de chaque languette 710 est comprise entre 0,25 et 1 mm, avec préférentiellement une valeur de 0,3 mm qui est un optimum permettant de réduire fortement les pertes de charges tout en augmentant le volume des canaux 11 pour la circulation de gaz et en limitant la quantité de métal à utiliser ainsi que la hauteur totale de l'interconnecteur 5.

Ces modifications conformes à l'invention permettent alors d'obtenir un gain en termes de pertes de charges d'au moins 25 % et jusqu'à environ 80 %.

Par ailleurs, un interconnecteur 5 peut présenter une géométrie particulière, notamment rainurée avec la présence de dents et de canaux. Par exemple, comme décrit dans la demande de brevet français FR 2 996 065 A1, l'interconnecteur 5 peut être constitué par un composant comportant un substrat en alliage métallique, notamment de type chromino-formeur, dont l'élément de base est du Fer ou du Nickel, en particulier des aciers ferritiques de type K41 d'Uginox^{®} ou de type Crofer de VDM^{®}, ce substrat ayant deux faces planes principales, l'une des faces étant revêtue d'un revêtement comportant une couche épaisse en céramique, poreuse ou non, rainurée en délimitant des canaux pour la distribution et/ou la collecte de gaz et des dents, cette couche étant dénommée également « couche de contact ». Ainsi, les dents et canaux peuvent être formés sur la couche de contact. Aussi, dans la description qui suit, il est entendu que les dents et canaux, ou plus généralement les reliefs, d'un interconnecteur 5 peuvent être formés sur une couche de contact de cet interconnecteur 5.

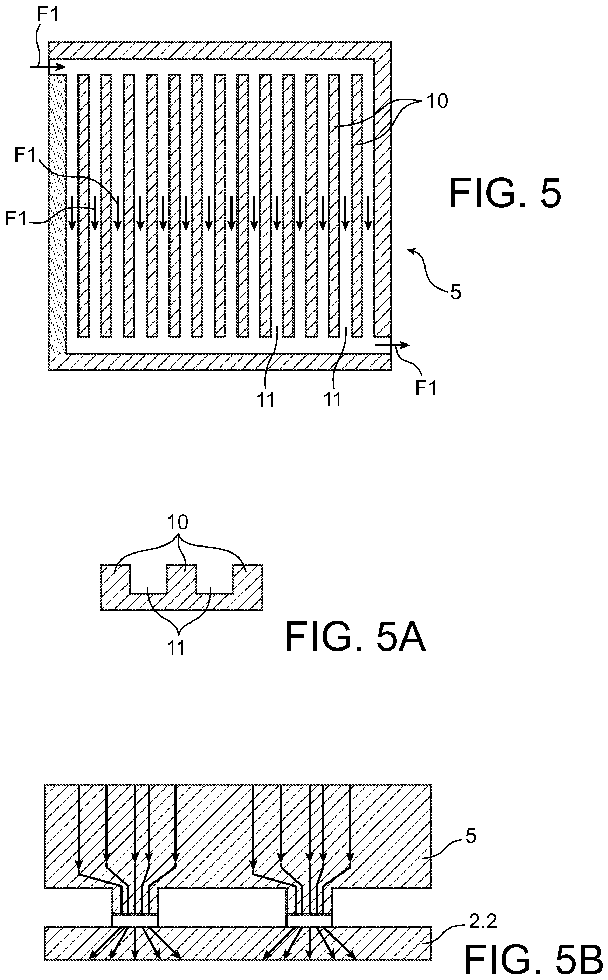

On a représenté, sur les figures 5, 5A et 5B, un interconnecteur 5 couramment utilisé dans un empilement de type SOEC/SOFC haute température. L'amenée ou la collecte du courant à l'électrode est réalisée par les éléments en relief sous forme de dents 10, ou nervures, qui sont en contact mécanique direct avec l'électrode concernée. L'amenée de vapeur d'eau à la cathode ou de gaz drainant à l'anode dans un électrolyseur EHT, l'amenée de dioxygène à la cathode ou d'hydrogène à l'anode dans une pile SOFC est symbolisée par les flèches F1 visibles sur la figure 5.

La collecte de l'hydrogène produit à la cathode ou de l'oxygène produit à l'anode dans un électrolyseur EHT, la collecte de l'eau produite à la cathode ou de l'hydrogène en surplus à l'anode dans une pile SOFC est faite par les canaux 11 qui débouchent dans une connexion fluidique, couramment appelée clarinette, commune à l'empilement de cellules. La structure de ces interconnecteurs 5 est faite pour réaliser un compromis entre les deux fonctions d'amenée et de collecte (gaz/courant).

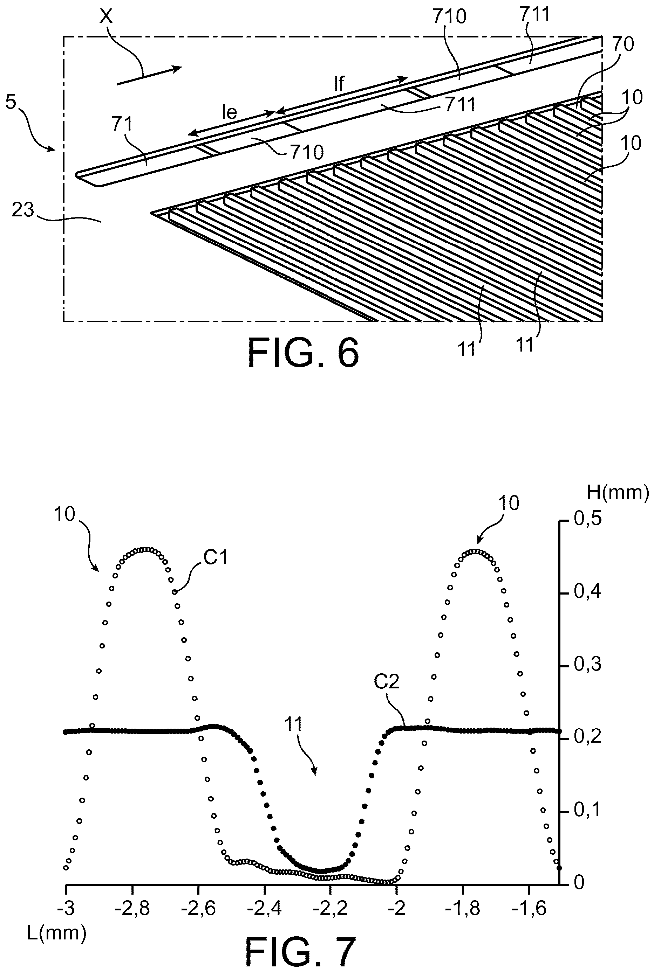

Par ailleurs, la figure 6 représente partiellement, selon une vue en perspective, les dents 10 et canaux 11 avec visualisation également des languettes 710 et fentes 711. Conformément à l'invention, la largeur lₑ des languettes 710 est comprise entre 0,1 mm et 3 mm, de préférence de l'ordre de 1 mm. De plus, la largeur l_{f} de chaque fente 711 est comprise entre 3 et 5 mm, avec une valeur préférentielle de l'ordre de 4,9 mm. Également, la hauteur hₑ de chaque languette 710 est comprise entre 0,25 et 1 mm, avec préférentiellement une valeur de 0,3 mm.

Pour obtenir une bonne conductivité électrique entre un interconnecteur 5, notamment la couche de contact, et une cellule électrochimique, il faut que les dents 10 soient peu espacées entre elles. Toutefois, cela tend alors à avoir une surface de passage des gaz réduite, ce qui peut conduire à des pertes de charges importantes lors du fonctionnement.

Par ailleurs, il faut que l'interconnecteur 5 permette de faire circuler correctement les gaz et d'avoir de faibles pertes de charges, ce qui peut être réalisé à l'aide de canaux 11 larges. Néanmoins, cela conduit à avoir des dents 10 espacées les unes des autres, ce qui pénalise la conductivité électrique.

En outre, il faut que la géométrie des dents 10 et des canaux 11 puisse accommoder les défauts de surface, notamment des cellules et de l'interconnecteur 5. Pour cela, ils doivent pouvoir s'écraser facilement. Cela peut par exemple être obtenu en réalisant des dents 10 de faible largeur. Cependant, si les dents 10 s'écrasent beaucoup, la hauteur des canaux 11 diminuera beaucoup et la surface de passage des gaz en sera diminuée, ce qui conduira à des pertes de charges plus importantes. A titre d'exemple, la figure 7 illustre, sous forme graphique, la hauteur H, exprimée en mm, des dents 10 en fonction de la longueur L, exprimée en mm, pour une configuration avant serrage C1 et une configuration après serrage C2.

La force appliquée à un empilement de cellules à oxydes solides de type SOEC/SOFC, ou stack, permet de calculer la contrainte locale de serrage. Ainsi, si une force F de 1000 N est appliquée et que la surface d'appui S est de 100 cm², alors la contrainte F/S sera de 0,2 MPa. Si le contact se fait à l'aide des dents 10 d'un interconnecteur 5, notamment de sa couche de contact, qui représentent la moitié de la surface, alors la contrainte locale sera de 0,4 MPa.

Trois expérimentations réelles (E1, E2, E3) de production d'hydrogène à partir d'un empilement de type SOEC de cinq cellules de surface de 100 cm² ont été réalisées avec deux géométries (dent A et dent B) d'interconnecteurs et deux forces de serrage (force A et force B) différentes. Un débit total de 12 Nml/min/cellule/cm² de mélange de vapeur d'eau et d'hydrogène a été envoyé. Le mélange H₂O/H₂ est de 90 % de H₂O et de 10% de H₂. La température de l'empilement est de 800°C.

Une courbe de polarisation (E1 pour Dent A, Force A ; E2 pour Dent B, Force A ; E3 pour Dent B, Force B) est effectuée à chaque fois en montant progressivement le courant i, exprimé en A/cm², et en mesurant la tension E, exprimée en V, de cellules associées. Ces courbes permettent de mesurer le taux d'utilisation maximal t de la vapeur d'eau ainsi que les résistances électriques globales, appelées ASR pour « Area Specific resistance » en anglais) provenant des cellules, des interconnecteurs, des interfaces, des systèmes de raccordement, etc.

La géométrie de référence d'interconnecteur comporte un interconnecteur, notamment une couche de contact, avec des dents 10 de largeur A (dent A). Une deuxième géométrie d'interconnecteur a été réalisée avec des dents 10 de largeur B (dent B), trois fois inférieure à la largeur A. La force appliquée peut être la force de référence A (force A) ou la force B, trois fois inférieure à la force A.

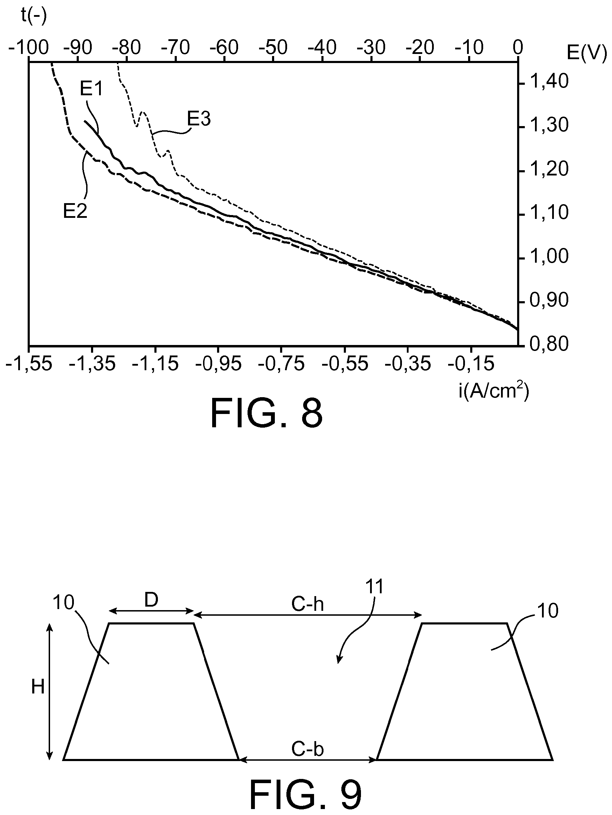

La figure 8 illustre, sous forme graphique, les courbes de polarisation obtenues E1, E2, E3 pour trois empilements avec deux géométries d'interconnecteurs (Dent A, Dent B) et deux forces (Force A, Force B) différentes. De plus, le tableau 1 ci-dessous présente les pertes de charges relatives obtenues de la chambre O₂.

**Tableau 1 : pertes de charges**

| | Dent A | Dent B |
|---|---|---|
| Force A | 100 | 180 |
| Force B | | 60 |

Ainsi, lorsque l'on a des dents plus fines (dent B) en maintenant la même force de serrage (force A), les ASR sont plus bas, donc les performances sont améliorées, mais les pertes de charges sont augmentées. L'écrasement des dents a réduit la surface de passage pour les gaz. Lorsque l'on a des dents plus fines (dent B) mais une force abaissée (force B), les performances sont dégradées (ASR plus haut et taux d'utilisation maximal abaissé) mais les pertes de charges sont fortement réduites.

Un aspect particulier de l'invention, qui prévoit une géométrie particulière des éléments en relief 10, notamment des dents, en plus de la géométrie optimisée des languettes 711, et qui va maintenant être décrit en référence aux figures 9 à 18, vise ainsi à optimiser ces aspects, et notamment à obtenir une conception d'interconnecteur, en particulier de couche de contact, permettant à la fois d'avoir un bon écrasement des dents 10 et de maintenir des canaux 11 de circulation des gaz avec un volume important.

Un interconnecteur 5 d'un empilement de cellules à oxydes solides de type SOEC/SOFC fonctionnant à haute température, destiné à être agencé entre deux cellules électrochimiques 1 adjacentes de l'empilement, chaque cellule étant formée d'une cathode, d'une anode et d'un électrolyte intercalé entre la cathode et l'anode, présente habituellement un géométrie régulière. En particulier, la couche de contact formant un revêtement sur l'une des faces d'un substrat en alliage métallique de l'interconnecteur 5 comporte classiquement des dents 10 et des canaux 11 de géométrie régulière. Ainsi, les dents 10 ont toutes les mêmes dimensions (hauteur et largeur) et tous les canaux 11 ont la même largeur. Les principales caractéristiques des dents 10 et des canaux 11 sont détaillées sur la vue en coupe de la figure 9. Ainsi, la largeur de contact d'une dent 10 est notée D, la largeur du haut du canal 11 est notée C-h tandis que la largeur du bas du canal 11 est notée C-b, et la hauteur des dents 10 est notée H.

Conformément à un aspect de l'invention, la géométrie de l'interconnecteur 5, notamment de la couche de contact, est modifiée pour obtenir une inhomogénéité permettant à la fois un contact électrique optimal et une distribution de gaz n'offrant que peu de résistance au passage des gaz, et donc peu de surpression. En particulier, un usinage inhomogène est réalisé pour obtenir des dents et des canaux aux caractéristiques différentes sur un même interconnecteur 5, notamment sur une même couche de contact de cet interconnecteur 5.

Ainsi, l'interconnecteur 5 comporte une face plane P sur laquelle sont formés au moins un premier groupe de premiers éléments identiques en relief 10a et un deuxième groupe de deuxièmes éléments identiques en relief 10b, les premiers 10a et deuxièmes 10b éléments en relief présentant des caractéristiques géométriques différentes.

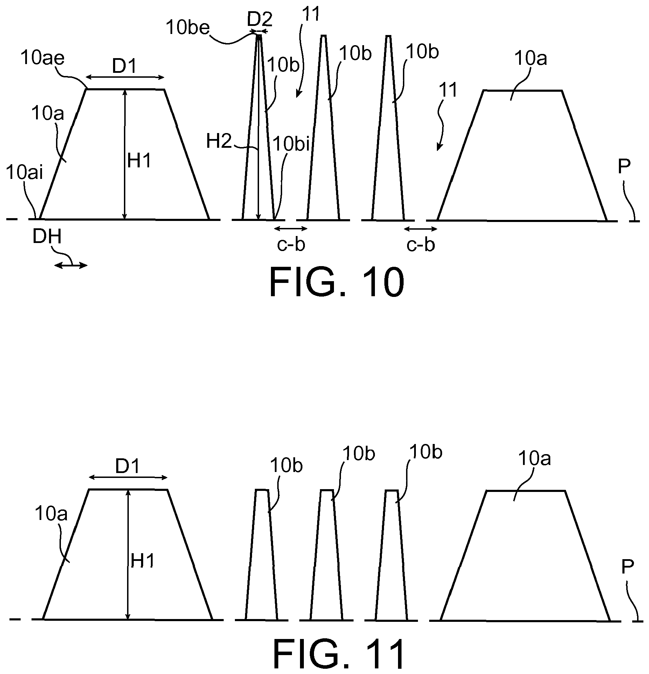

Les figures 10 et 11 présentent, avant et après écrasement, un exemple de réalisation avec deux types de géométrie d'usinage. Toutefois, un grand nombre de géométries différentes peut être prévu pour l'interconnecteur 5 dans le cadre de l'invention.

Ainsi, la hauteur H1 de chaque premier élément en relief 10a, mesurée comme étant la plus grande dimension verticale du premier élément en relief 10a par rapport à la face plane P, est différente de la hauteur H2 de chaque deuxième élément en relief 10b, mesurée comme étant la plus grande dimension verticale du deuxième élément en relief 10b. De même, la largeur de contact D1 de chaque premier élément en relief 10a, mesurée comme étant la plus grande dimension horizontale par rapport à la face plane P de l'extrémité externe 10ae de contact de chaque premier élément en relief 10a, opposée à l'extrémité interne 10ai au contact de la face plane P et destinée à être au contact d'une cellule électrochimique 1, est différente de la largeur de contact D2 de chaque deuxième élément en relief 10b, mesurée comme étant la plus grande dimension horizontale par rapport à la face plane P de l'extrémité externe 10be de contact de chaque deuxième élément en relief 10b, opposée à l'extrémité interne 10bi au contact de la face plane P et destinée à être au contact d'une cellule électrochimique 1.

En particulier, la largeur de contact D1 de chaque premier élément en relief 10a est comprise entre 0,5 et 5 mm, étant préférentiellement égale à 1 mm. Cette grande largeur permet de supporter les contraintes de serrage et de jouer le rôle de limitateur d'écrasement.

La largeur de contact D2 de chaque deuxième élément en relief 10b est comprise entre 0,005 mm et 0,5 mm, étant préférentiellement égale à 100 µm. Cette petite largeur permet d'avoir des points de contact réguliers sur toute la surface en contact de la cellule électrochimique 1 sans gêner les écoulements de fluide.

Par ailleurs, la hauteur H1 de chaque premier élément en relief 10a est plus faible que la hauteur H2 de chaque deuxième élément en relief 10b, étant par exemple respectivement de 350 et 400 µm. Ainsi, les éléments en relief 10b de faible largeur D2 assurent le contact électrique.

Il est à noter que dans cet exemple des figures 10 et 11, les éléments en relief 10a, 10b, 10c se présentent sous la forme de dents ou rainures, disposées parallèlement entre elles. Toutefois, les éléments en relief pourraient prendre tout type de forme garantissant d'assurer le contact électrique et la circulation des gaz. Ainsi, les espaces entre les éléments en relief 10a, 10b, 10c forment des canaux 11 de circulation des gaz.

Par ailleurs, les éléments en relief 10a, 10b sont répartis ici de façon régulière sur la face plane P. Précisément, ils sont espacés entre eux d'une même distance C-b, notamment comprise entre 50µm et 5 mm, et préférentiellement égale à 750 µm, selon au moins une direction horizontale DH sur la face plane P. Les écartements entre éléments en relief 10a, 10b sont donc constants et permettent une bonne répartition du courant au sein de l'électrode de la cellule électrochimique 1. La valeur de l'écartement peut être fonction de la cellule électrochimique 1 utilisée.

Lors du serrage, les éléments en relief 10b vont s'écraser en premier car ils sont plus hauts. L'écrasement sera fort car la largeur de contact D2 est faible. Cela va alors permettre une bonne accommodation des défauts géométriques.

Cet écrasement va se poursuivre jusqu'à ce que la hauteur H2 des éléments en relief 10b rejoigne la hauteur H1 des éléments en relief 10a. La surface en contact va donc augmenter rapidement, ce qui va arrêter l'écrasement. Cet arrêt de l'écrasement permet de préserver des espaces importants pour les canaux 11 de circulation des gaz. Ainsi, les pertes de charges peuvent rester faibles. De plus, l'espacement C-b entre les éléments en relief 10a, 10b étant assez faible, on obtient une bonne conductivité électrique.

Avantageusement, l'invention ne nécessite pas de régler finement la force de serrage pour arrêter l'écrasement. En effet, la forte augmentation de surface lorsque le contact avec les éléments en relief 10a s'établit permet de faire baisser fortement la contrainte, limitant l'effet de la force initiale.

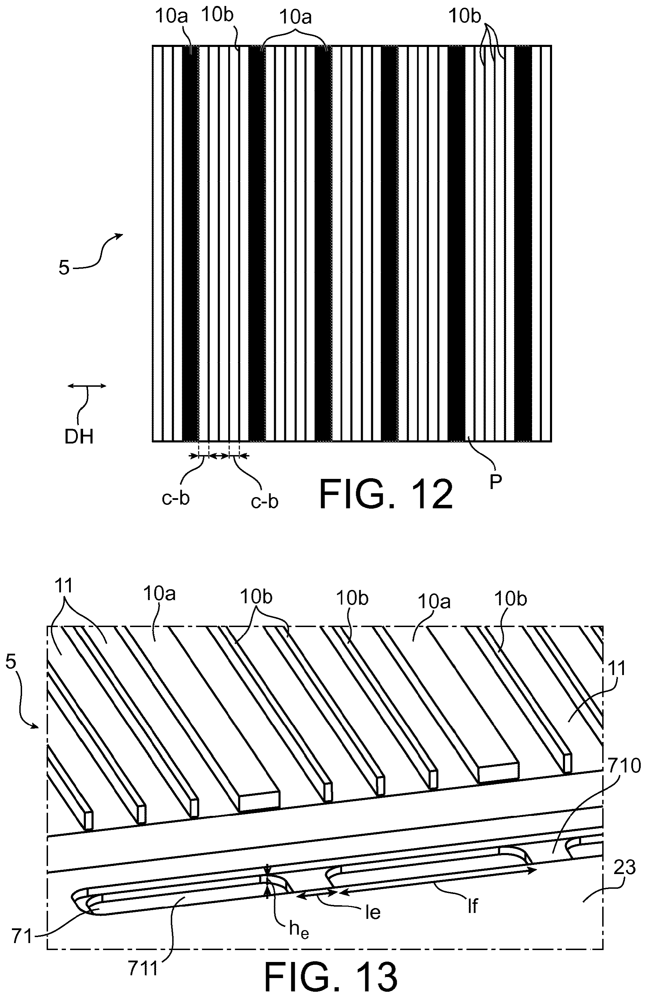

La figure 12 permet de visualiser la répartition régulière des premiers 10a et deuxièmes 10b éléments en relief de l'exemple des figures 10 et 11.

Conformément à l'invention, un couplage de la position des languettes 710 avec les dents 10 de l'interconnecteur 5 est réalisé, comme illustré sur la figure 13.

Ainsi, les dents 10a de largeur D1 sont positionnées au droit des languettes 710 tandis que les dents fines 10b de largeur D2 sont situées en face des fentes 711. De cette façon, on optimise la fluidique de l'interconnecteur 5, notamment de la couche de contact.

Avantageusement, la largeur D1 des dents 10a est égale à la largeur lₑ des languettes 710.

Avantageusement, la largeur D1 ne génère pas de surpression particulière puisqu'elle correspond à la largeur des languettes 711. De plus, la fluidique de distribution est améliorée car les écoulements de gaz se font de manière bien rectiligne sans perturbation d'écoulement.

Par ailleurs, la fabrication des interconnecteurs 5 et des cellules électrochimiques 1 n'étant pas régulière, il peut en outre être avantageux d'avoir un interconnecteur 5, notamment une couche de contact de l'interconnecteur 5 comprenant les éléments en relief, dont l'écrasement peut être modulé lors du fonctionnement.

Ainsi, en créant un nombre N de géométries différentes, on peut obtenir des paliers d'écrasement facilement accessibles, même au cours d'un essai. Autrement dit, l'interconnecteur peut plus généralement comporter un nombre N, N étant un nombre entier supérieur ou égal à 2, de préférence compris entre 2 et 50, de préférence encore égal à 5, de groupes d'éléments en relief, formés sur la face plane P, les éléments en relief d'un même groupe étant tous identiques, et les éléments en relief de groupes différents présentant des caractéristiques géométriques différentes, à savoir des hauteurs différentes et des largeurs de contact différentes.

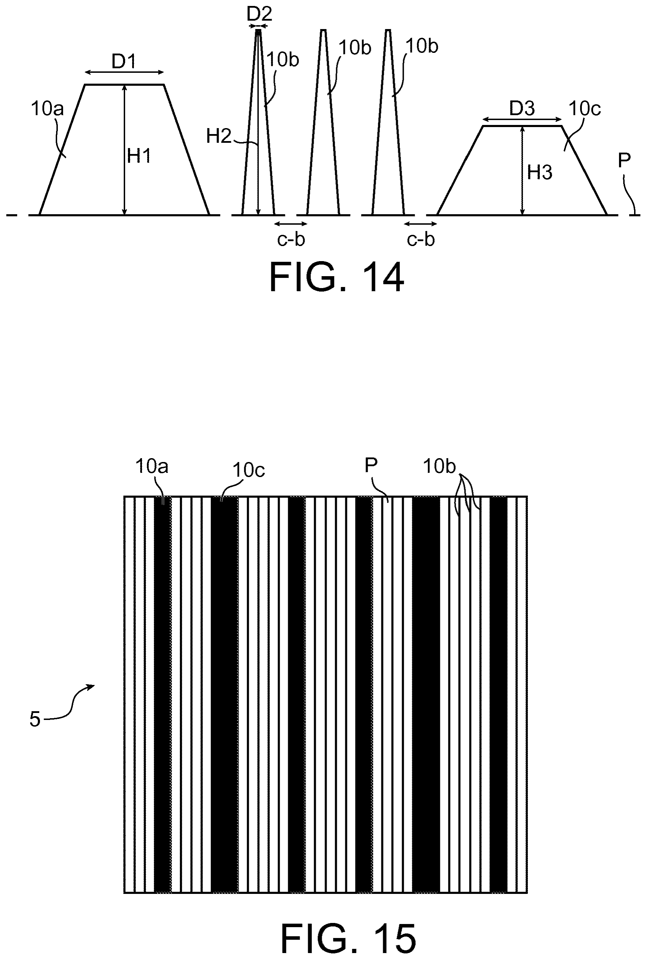

Les figures 14 et 15 permettent d'illustrer le cas pour N = 3, qui n'est qu'un exemple illustratif et non limitatif de l'invention. Ainsi, l'interconnecteur 5 comprend des premiers éléments en relief 10a de largeur de contact D1 et de hauteur H1, des deuxièmes éléments en relief 10b de largeur de contact D2 et de hauteur H2, et des troisièmes éléments en relief 10c de largeur de contact D3 et de hauteur H3. Les valeurs choisies sont telles que D3 > D1 > D2 et H2 > H1 > H3.

Cette possibilité permet d'avoir plusieurs niveaux d'écrasement possibles. Ainsi, il est possible d'avoir un écrasement à une force 1 qui va écraser seulement les éléments en relief 10b. Si cela ne suffit pas, car les défauts géométriques à compenser sont importants, on peut passer à une force 2, supérieure à la force 1, pour écraser les éléments en relief 10a jusqu'à la hauteur H3 des éléments en relief 10c. On peut ainsi réguler l'écrasement et le contact en fonction des besoins.

On peut donc prévoir, si besoin, d'avoir N géométries différentes de largeur de contact croissante. L'augmentation continue de la force de serrage permettrait d'écraser par paliers les éléments en relief, puis de s'arrêter dès que le contact serait bon et pour un écrasement optimal. Ainsi, on obtient un interconnecteur 5, ou une couche de contact de celui-ci, qui s'adapte à toutes les géométries.

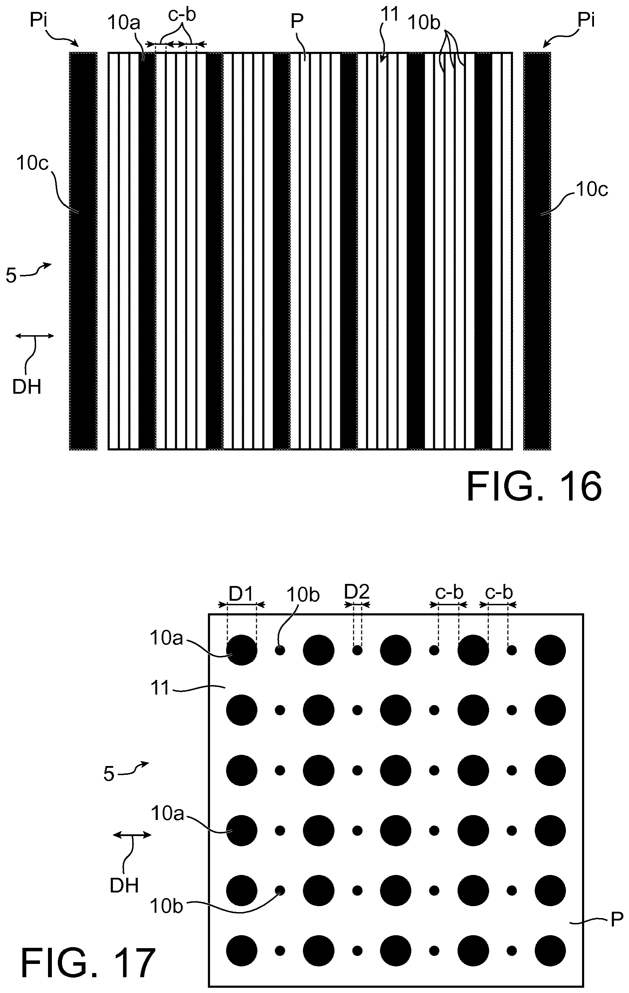

La figure 16 illustre la possibilité d'avoir les éléments en relief 10c présentant la largeur de contact D3 la plus importante qui soient situés en périphérie Pi de la face plane P, à distance des autres éléments en relief 10a, 10b et des canaux 11 de circulation des gaz.

Ces éléments en relief 10c forment les limitateurs d'écrasement puisqu'ils ont la plus grande largeur de contact D3. Ils peuvent être situés hors zone active. De cette façon, on réserve un maximum de surface pour le passage des gaz.

En outre, toute forme reste possible pour les éléments en relief 10a, 10b, 10c. Ils ne sont pas nécessairement sous forme de dents comme décrit précédemment.

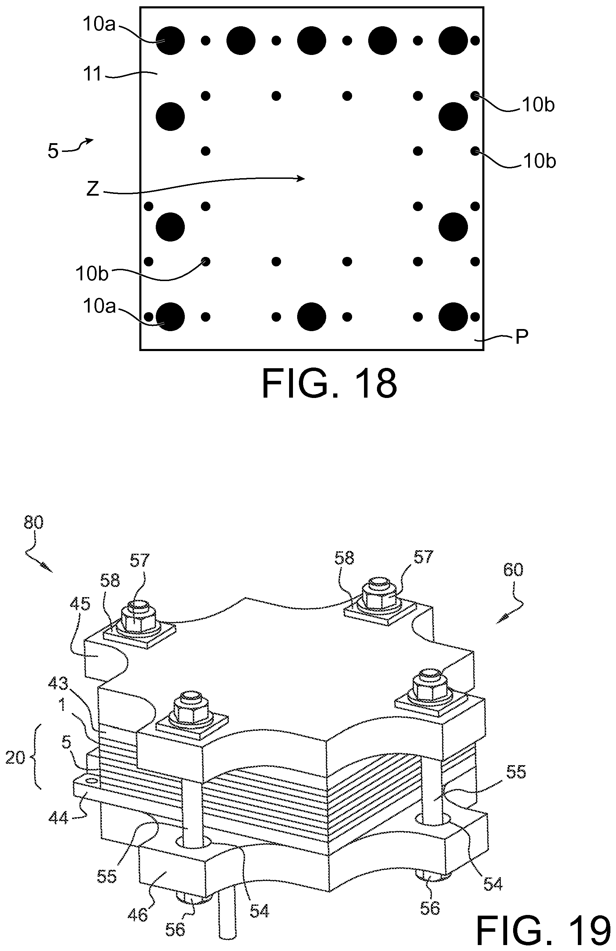

Ainsi, les figures 17 et 18 illustrent la possibilité d'avoir des éléments en relief 10a, 10b sous la forme de plots, et notamment de forme cylindrique. D'autres formes sont également possibles, par exemple une forme parallélépipédique. Les espaces entre les éléments en relief 10a, 10b forment alors un unique canal en serpentin 11 de circulation des gaz.

Avantageusement, cela peut permettre une régulation des contraintes au plus juste avec une surface adaptée et une optimisation du passage des gaz.

Par ailleurs, la figure 18 illustre la possibilité d'avoir au moins une zone Z de la face plane P, ici la zone centrale Z, qui soit dépourvue d'éléments en relief. En effet, les échauffements dus à des surfaces de cellules électrochimiques 1 trop importantes peuvent créer des problèmes de surchauffe, et notamment au centre des cellules 1 où la chaleur a du mal à être évacuée. Ainsi, on peut volontairement limiter les réactions au cœur des cellules 1 en diminuant la conductivité dans la zone spécifique centrale Z, laquelle est ainsi volontairement dépourvue de contact électrique.

Il est à noter que, avantageusement, l'interconnecteur 5 selon l'invention peut comporter un substrat en alliage métallique, notamment de type chromino-formeur dont l'élément de base est du Fer (Fe) ou du Nickel (Ni), en particulier des aciers ferritiques de type K41 d'Uginox^{®} ou de type Crofer de VDM^{®}, présentant deux faces planes principales, comme décrit dans la demande de brevet français FR 2 996 065 A1.

L'une des faces planes principales comprend une première couche de revêtement formant première couche de contact avec une cellule électrochimique 1, et l'autre des faces planes principales comprend une deuxième couche de revêtement formant deuxième couche de contact avec une cellule électrochimique 1.

La première couche de revêtement et/ou la deuxième couche de revêtement peuvent comprendre la face plane P et les éléments en relief 10a, 10b, 10c formés sur celle-ci, notamment par usinage, tels que décrits précédemment.

Ces éléments en relief peuvent être identiques ou non sur les première et deuxième couches de revêtement, et leur répartition peut être identique ou non sur les première et deuxième couches de revêtement, lorsque ces deux couches de revêtement sont pourvues de tels éléments en relief.

La première couche de revêtement peut notamment être une première couche de contact épaisse en céramique, poreuse ou non, notamment à base de manganite de lanthane dopée strontium. Elle peut être prévue du côté de l'électrode à oxygène.

La deuxième couche de revêtement peut notamment être une deuxième couche de contact épaisse métallique, notamment à base de Nickel. Elle peut être prévue du côté de l'électrode à hydrogène.

Cette deuxième couche peut en particulier comporter au moins deux types de grille de Nickel différents. Sur ces grilles, le nombre de mailles par cm² et le diamètre de fil peuvent être modulés. Il est par exemple possible d'utiliser une grille A de hauteur Ha avec un nombre de mailles Na, formant des éléments en relief, lui permettant de s'écraser fortement, et une deuxième grille B de hauteur Hb, inférieur à la hauteur Ha, avec un nombre de mailles Nb, formant des éléments en relief, inférieur au nombre de mailles Na, de sorte à jouer le rôle de limiteur d'écrasement.

Par ailleurs, la figure 19 représente un empilement 20 de cellules à oxydes solides de type SOEC/SOFC fonctionnant à haute température conforme à l'invention.

Plus précisément, la figure 19 montre un ensemble 80 comprenant l'empilement 20 de cellules à oxydes solides de type SOEC/SOFC et un système de serrage 60.

Cet ensemble 80 présente une structure semblable à celle de l'ensemble décrit dans la demande de brevet français FR 3 045 215 A1.

L'empilement 20 comporte une pluralité de cellules électrochimiques 1 formées chacune d'une cathode, d'une anode et d'un électrolyte intercalé entre la cathode et l'anode, et une pluralité d'interconnecteurs 5 conformes à l'invention agencés chacun entre deux cellules électrochimiques 1 adjacentes. Cet ensemble de cellules électrochimiques 1 et d'interconnecteurs 5 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 1 et la pluralité d'interconnecteurs 5 sont enserrées, soit entre lesquelles se trouve le stack.

Par ailleurs, l'ensemble 80 comporte aussi un système de serrage 60 de l'empilement 20 de cellules à oxydes solides de type SOEC/SOFC, comportant une plaque de serrage supérieure 45 et une plaque de serrage inférieure 46, entre lesquelles l'empilement 20 de cellules à oxydes solides de type SOEC/SOFC est enserré.

Chaque plaque de serrage 45, 46 du système de serrage 60 comporte quatre orifices de serrage 54. De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46. Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46. Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Bien entendu, l'invention n'est pas limitée aux exemples de réalisation qui viennent d'être décrits. Diverses modifications peuvent y être apportées par l'homme du métier.

## Revendications

1. Interconnecteur (5) pour un empilement (20) de cellules à oxydes solides de type SOEC/SOFC fonctionnant à haute température, destiné à être agencé entre deux cellules électrochimiques (1) adjacentes de l'empilement (20), chaque cellule électrochimique (1) étant formée d'une cathode, d'une anode et d'un électrolyte intercalé entre la cathode et l'anode, l'interconnecteur (5) étant formé par l'assemblage d'au moins trois plaques (21, 22, 23) allongées selon un premier axe de symétrie (X) et un deuxième axe de symétrie (Y) orthogonaux entre eux, une plaque centrale (22) étant intercalée entre une première plaque d'extrémité (21) et une deuxième plaque d'extrémité (23), la plaque centrale (22) comportant une partie centrale (70) et, à sa périphérie, au moins deux lumières (71, 73) allongées sur une longueur correspondant sensiblement à la longueur de la partie centrale (70) selon le premier axe de symétrie (X) et deux lumières (72, 74) allongées sur une longueur correspondant sensiblement à la longueur de la partie centrale (70) selon le deuxième axe de symétrie (Y), chaque lumière (71, 72, 73, 74) comportant des languettes (710, 720, 730, 740) espacées les unes des autres pour former un peigne et des fentes (711) définies entre le bord d'une lumière (71) et une languette (710) ou entre deux languettes (711) successives,
**caractérisé en ce que** la largeur (lₑ) de chaque languette (710) d'au moins une lumière (71) est comprise entre 0,1 mm et 3 mm, notamment de l'ordre de 1 mm,
l'interconnecteur (5) comportant un substrat en alliage métallique présentant deux faces planes principales, l'une des faces planes principales comprenant une première couche de revêtement formant première couche de contact avec une cellule électrochimique (1), l'autre des faces planes principales comprenant une deuxième couche de revêtement formant deuxième couche de contact avec une cellule électrochimique (1),
la première couche de revêtement et/ou la deuxième couche de revêtement comprenant une face plane (P) et des éléments en relief (10a, 10b, 10c) formés sur celle-ci.

2. Interconnecteur selon la revendication 1, **caractérisé en ce que** la largeur (l_{f}) de chaque fente (711) d'au moins une lumière (71) est comprise entre 3 et 5 mm, notamment de l'ordre de 4,9 mm.

3. Interconnecteur selon la revendication 1 ou 2, **caractérisé en ce que** la hauteur (hₑ) de chaque languette (710) d'au moins une lumière (71) est comprise entre 0,25 et 1 mm, notamment de l'ordre de 0,3 mm.

4. Interconnecteur selon l'une des revendications précédentes, **caractérisé en ce que** l'interconnecteur (5), notamment la partie centrale (70) de la plaque centrale (22), comporte une face plane (P) sur laquelle sont formés au moins un premier groupe de premiers éléments identiques en relief (10a) par rapport à la face plane (P) et un deuxième groupe de deuxièmes éléments identiques en relief (10b) par rapport à la face plane (P),
les premiers éléments en relief (10a) présentant des caractéristiques géométriques différentes par rapport aux deuxièmes éléments en relief (10b),
la hauteur (H1) de chaque premier élément en relief (10a), mesurée comme étant la plus grande dimension verticale du premier élément en relief (10a) par rapport à la face plane (P), étant différente de la hauteur (H2) de chaque deuxième élément en relief (10b), mesurée comme étant la plus grande dimension verticale du deuxième élément en relief (10b),
la largeur de contact (D1) de chaque premier élément en relief (10a), mesurée comme étant la plus grande dimension horizontale par rapport à la face plane (P) de l'extrémité externe (10ae) de contact de chaque premier élément en relief (10a), opposée à l'extrémité interne (10ai) au contact de la face plane (P) et destinée à être au contact d'une cellule électrochimique (1), étant différente de la largeur de contact (D2) de chaque deuxième élément en relief (10b), mesurée comme étant la plus grande dimension horizontale par rapport à la face plane (P) de l'extrémité externe (10be) de contact de chaque deuxième élément en relief (10b), opposée à l'extrémité interne (10bi) au contact de la face plane (P) et destinée à être au contact d'une cellule électrochimique (1).

5. Interconnecteur selon la revendication 4, **caractérisé en ce que** les premiers éléments en relief (10a) présentent une largeur de contact (D1) supérieure à la largeur de contact (D2) des deuxièmes éléments en relief (10b), les premiers éléments en relief (10a) étant situés au droit des languettes (710) d'au moins une lumière (71) et les deuxièmes éléments en relief (10b) étant situés au droit des fentes (711) de ladite au moins une lumière (71).

6. Interconnecteur selon la revendication 5, **caractérisé en ce que** la largeur de contact (D1) des premiers éléments en relief (10a) est égale à la largeur (lₑ) des languettes (710) de ladite au moins une lumière (71).

7. Interconnecteur selon l'une quelconque des revendications 4 à 6, **caractérisé en ce que** la largeur de contact (D1) de chaque premier élément en relief (10a) est comprise entre 0,5 et 5 mm, préférentiellement égale à 1 mm, **en ce que** la largeur de contact (D2) de chaque deuxième élément en relief (10b) est comprise entre 0,005 mm et 0,5 mm, préférentiellement égale à 100 µm, **en ce que** la hauteur (H1) de chaque premier élément en relief (10a) est comprise entre 200 µm et 1000 µm, préférentiellement égale à 350 µm, et **en ce que** la hauteur (H2) de chaque deuxième élément en relief (10b) est comprise entre 250 µm et 1050 µm, préférentiellement égale à 400 µm.

8. Interconnecteur selon l'une quelconque des revendications 4 à 7, **caractérisé en ce que** la différence entre la hauteur (H2) de chaque deuxième élément en relief (10b) et la hauteur (H1) de chaque premier élément en relief (10a) est comprise entre 5 µm et 500 µm, notamment de l'ordre de 50 µm.

9. Interconnecteur selon l'une quelconque des revendications 4 à 8, **caractérisé en ce qu'**il comporte un nombre N, N étant un nombre entier supérieur ou égal à 2, de préférence compris entre 2 et 50, de préférence encore égal à 5, de groupes d'éléments en relief (10a, 10b, 10c), formés sur la face plane (P), les éléments en relief (10a ; 10b ; 10c) d'un même groupe étant tous identiques, et les éléments en relief (10a, 10b, 10c) de groupes différents présentant des caractéristiques géométriques différentes, à savoir des hauteurs (H1, H2, H3) différentes et des largeurs de contact (D1, D2, D3) différentes.

10. Interconnecteur selon l'une quelconque des revendications 4 à 9, **caractérisé en ce que** les éléments en relief (10a, 10b, 10c) se présentent sous la forme de dents ou rainures, disposées parallèlement entre elles, les espaces entre les éléments en relief (10a, 10b, 10c) formant des canaux (11) de circulation des gaz.

11. Interconnecteur selon l'une quelconque des revendications 4 à 9, **caractérisé en ce que** les éléments en relief (10a, 10b, 10c) se présentent sous la forme de plots, notamment de forme cylindrique, les espaces entre les éléments en relief (10a, 10b, 10c) formant un unique canal en serpentin (11) de circulation des gaz.

12. Interconnecteur selon l'une quelconque des revendications 4 à 11, **caractérisé en ce que** les éléments en relief (10c) présentant la largeur (D3) la plus importante sont situés en périphérie (Pi) de la face plane (P), à distance des autres éléments en relief (10a, 10b) et du ou des canaux (11) de circulation des gaz formés par les espaces entre les autres éléments en relief (10a, 10b).

13. Interconnecteur selon l'une quelconque des revendications précédentes, **caractérisé en ce que** le substrat en alliage métallique est de type chromino-formeur dont l'élément de base est du Fer (Fe) ou du Nickel (Ni), et **en ce que** les éléments en relief (10a, 10b, 10c) formés sur la face plane (P) sont formés par usinage.

14. Interconnecteur selon l'une quelconque des revendications précédentes, **caractérisé en ce que** la première couche de revêtement est une couche de revêtement épaisse en céramique, poreuse ou non, le matériau en céramique étant notamment choisi parmi un manganite de lanthane de formule La₁₋ₓSrₓMO₃ avec M (métaux de transition) = Nickel (Ni), Fer (Fe), Cobalt (Co), Manganèse (Mn), Chrome(Cr), seul ou en mélange, ou des matériaux de structure lamellaire tels que les nickelâtes de lanthanide de formule Ln₂NiO₄ (Ln = Lanthane (La), Néodyme (Nd), Praséodyme (Pr)), ou un autre oxyde pérovskite conducteur électrique.

15. Interconnecteur selon l'une quelconque des revendications précédentes, **caractérisé en ce que** la deuxième couche de revêtement est une couche de revêtement épaisse métallique, le matériau métallique étant notamment choisi parmi le Nickel (Ni) et ses alliages ou les alliages chromino-formeurs dont l'élément de base est le Fer (Fe).

16. Empilement (20) de cellules à oxydes solides de type SOEC/SOFC fonctionnant à haute température, comportant une pluralité de cellules électrochimiques (1) formées chacune d'une cathode, d'une anode et d'un électrolyte intercalé entre la cathode et l'anode, et une pluralité d'interconnecteurs (5) selon l'une quelconque des revendications précédentes, agencés chacun entre deux cellules électrochimiques (1) adjacentes.

## Patentansprüche

1. Zwischenverbinder (5) für einen Stapel (20) von hochtemperaturbetriebenen Festoxidzellen des Typs SOEC/SOFC, der zwischen zwei benachbarten elektrochemischen Zellen (1) des Stapels (20) angeordnet sein soll, wobei jede elektrochemische Zelle (1) aus einer Kathode, einer Anode und einem zwischen der Kathode und der Anode eingelegten Elektrolyt gebildet ist, wobei der Zwischenverbinder (5) durch die Verbindung von mindestens drei Platten (21, 22, 23) gebildet ist, die sich entlang einer ersten Symmetrieachse (X) und einer zweiten Symmetrieachse (Y), die orthogonal zueinander sind, erstrecken, wobei eine Mittelplatte (22) zwischen einer ersten Endplatte (21) und einer zweiten Endplatte (23) eingelegt ist, wobei die Mittelplatte (22) einen Mittelteil (70) und an ihrem Umfang mindestens zwei Lumen (71, 73) umfasst, die sich über eine Länge erstrecken, die im Wesentlichen der Länge des Mittelteils (70) entlang der ersten Symmetrieachse (X) entspricht, und zwei Lumen (72, 74), die sich über eine Länge erstrecken, die im Wesentlichen der Länge des Mittelteils (70) entlang der zweiten Symmetrieachse (Y) entspricht, wobei jedes Lumen (71, 72, 73, 74) Laschen (710, 720, 730, 740), die in Abständen voneinander angeordnet sind, um einen Kamm zu bilden, und Schlitze (711) umfasst, die zwischen dem Rand eines Lumens (71) und einer Lasche (710) oder zwischen zwei aufeinanderfolgenden Laschen (711) definiert sind,
**dadurch gekennzeichnet, dass** die Breite (lₑ) jeder Lasche (710) mindestens eines Lumens (71) zwischen 0,1 mm und 3 mm, insbesondere im Bereich von 1 mm, liegt,
wobei der Zwischenverbinder (5) ein Substrat aus einer Metalllegierung mit zwei ebenen Hauptflächen besitzt, wobei eine der ebenen Hauptflächen eine erste Beschichtungsschicht umfasst, die eine erste Kontaktschicht mit einer elektrochemischen Zelle (1) bildet, und die andere der ebenen Hauptflächen eine zweite Beschichtungsschicht umfasst, die eine zweite Kontaktschicht mit einer elektrochemischen Zelle (1) bildet,
wobei die erste Beschichtungsschicht und/oder die zweite Beschichtungsschicht eine ebene Fläche (P) und darauf gebildete Reliefelemente (10a, 10b, 10c) umfasst.

2. Zwischenverbinder nach Anspruch 1, **dadurch gekennzeichnet, dass** die Breite (l_{f}) jedes Schlitzes (711) mindestens eines Lumens (71) zwischen 3 und 5 mm, insbesondere im Bereich von 4,9 mm, liegt.

3. Zwischenverbinder nach Anspruch 1 oder 2, **dadurch gekennzeichnet, dass** die Höhe (hₑ) jeder Lasche (710) mindestens eines Lumens (71) zwischen 0,25 und 1 mm, insbesondere im Bereich von 0,3 mm, liegt.

4. Zwischenverbinder nach einem der vorhergehenden Ansprüche, **dadurch gekennzeichnet, dass** der Zwischenverbinder (5), insbesondere der Mittelteil (70) der Mittelplatte (22), eine ebene Fläche (P) aufweist, auf der mindestens eine erste Gruppe von ersten identischen Reliefelementen (10a) in Bezug auf die ebene Fläche (P) und eine zweite Gruppe von zweiten identischen Reliefelementen (10b) in Bezug auf die ebene Fläche (P) ausgebildet sind,
wobei die ersten Reliefelemente (10a) in Bezug auf die zweiten Reliefelemente (10b) unterschiedliche geometrische Merkmale besitzen,
wobei die Höhe (H1) jedes ersten Reliefelements (10a), gemessen als die größte vertikale Abmessung des ersten Reliefelements (10a) in Bezug auf die ebene Fläche (P), von der Höhe (H2) jedes zweiten Reliefelements (10b), gemessen als die größte vertikale Abmessung des zweiten Reliefelements (10b), unterschiedlich ist,
wobei die Kontaktbreite (D1) jedes ersten Reliefelements (10a), gemessen als größte horizontale Abmessung in Bezug auf die ebene Fläche (P) des äußeren Kontaktendes (10ae) jedes ersten Reliefelements (10a), das dem inneren Ende (10ai) gegenüberliegt, das mit der ebenen Fläche (P) in Kontakt steht und dazu bestimmt ist, mit einer elektrochemischen Zelle (1) in Kontakt zu stehen, sich von der Kontaktbreite (D2) jedes zweiten Reliefelements (10b) unterscheidet, gemessen als größte horizontale Abmessung in Bezug auf die ebene Fläche (P) des äußeren Kontaktendes (10be) jedes zweiten Reliefelements (10b), das dem inneren Ende (10bi) gegenüberliegt, das mit der ebenen Fläche (P) in Kontakt steht und dazu bestimmt ist, mit einer elektrochemischen Zelle (1) in Kontakt zu stehen.

5. Zwischenverbinder nach Anspruch 4, **dadurch gekennzeichnet, dass** die ersten Reliefelemente (10a) eine Kontaktbreite (D1) aufweisen, die größer ist als die Kontaktbreite (D2) der zweiten Reliefelemente (10b), wobei die ersten Reliefelemente (10a) sich auf der Höhe der Laschen (710) mindestens eines Lumens (71) befinden und die zweiten Reliefelemente (10b) sich auf der Höhe der Schlitze (711) des mindestens einen Lumens (71) befinden.

6. Zwischenverbinder nach Anspruch 5, **dadurch gekennzeichnet, dass** die Kontaktbreite (D1) der ersten Reliefelemente (10a) gleich der Breite (lₑ) der Laschen (710) des mindestens einen Lumens (71) ist.

7. Zwischenverbinder nach einem der Ansprüche 4 bis 6, **dadurch gekennzeichnet, dass** die Kontaktbreite (D1) jedes ersten Reliefelements (10a) zwischen 0,5 und 5 mm liegt, vorzugsweise gleich 1 mm ist, dass die Kontaktbreite (D2) jedes zweiten Reliefelements (10b) zwischen 0,005 mm und 0,5 mm liegt, vorzugsweise gleich 100 µm ist, dass die Höhe (H1) jedes ersten Reliefelements (10a) zwischen 200 µm und 1000 µm liegt, vorzugsweise gleich 350 µm ist, und dass die Höhe (H2) jedes zweiten Reliefelements (10b) zwischen 250 µm und 1050 µm liegt, vorzugsweise gleich 400 µm ist.

8. Zwischenverbinder nach einem der Ansprüche 4 bis 7, **dadurch gekennzeichnet, dass** der Unterschied zwischen der Höhe (H2) jedes zweiten Reliefelements (10b) und der Höhe (H1) jedes ersten Reliefelements (10a) zwischen 5 µm und 500 µm, insbesondere im Bereich von 50 µm, liegt.

9. Zwischenverbinder nach einem der Ansprüche 4 bis 8, **dadurch gekennzeichnet, dass** er eine Anzahl N, wobei N eine ganze Zahl größer oder gleich 2 ist, vorzugsweise zwischen 2 und 50 liegt, vorzugsweise gleich 5 ist, von Gruppen von Reliefelementen (10a, 10b, 10c) aufweist, die auf der ebenen Fläche (P) ausgebildet sind, wobei die Reliefelemente (10a; 10b; 10c) derselben Gruppe alle identisch sind und die Reliefelemente (10a, 10b, 10c) verschiedener Gruppen unterschiedliche geometrische Merkmale aufweisen, nämlich unterschiedliche Höhen (H1, H2, H3) und unterschiedliche Kontaktbreiten (D1, D2, D3).

10. Zwischenverbinder nach einem der Ansprüche 4 bis 9, **dadurch gekennzeichnet, dass** die Reliefelemente (10a, 10b, 10c) in Form von Zinken oder Nuten vorliegen, die parallel zueinander angeordnet sind, wobei die Zwischenräume zwischen den Reliefelementen (10a, 10b, 10c) Kanäle (11) für den Gasdurchfluss bilden.

11. Zwischenverbinder nach einem der Ansprüche 4 bis 9, **dadurch gekennzeichnet, dass** die Reliefelemente (10a, 10b, 10c) in Form von Stiften vorliegen, insbesondere zylindrisch geformten, wobei die Zwischenräume zwischen den Reliefelementen (10a, 10b, 10c) einen einzigen schlangenförmigen Kanal (11) für den Gasdurchfluss bilden.

12. Zwischenverbinder nach einem der Ansprüche 4 bis 11, **dadurch gekennzeichnet, dass** sich die Reliefelemente (10c) mit der größten Breite (D3) am Umfang (Pi) der ebenen Fläche (P) in einem Abstand zu den anderen Reliefelementen (10a, 10b) und zu dem oder den Kanälen (11) für den Gasdurchfluss befinden, die durch die Zwischenräume zwischen den anderen Reliefelementen (10a, 10b) gebildet werden.

13. Zwischenverbinder nach einem der vorhergehenden Ansprüche, **dadurch gekennzeichnet, dass** das Substrat aus Metalllegierung vom chrombildenden Typ ist, dessen Basiselement Eisen (Fe) oder Nickel (Ni) ist, und wobei die auf der ebenen Fläche (P) ausgebildeten Reliefelemente (10a, 10b, 10c) durch Bearbeitung gebildet werden.

14. Zwischenverbinder nach einem der vorhergehenden Ansprüche, **dadurch gekennzeichnet, dass** die erste Beschichtungsschicht eine poröse oder nicht poröse dicke keramische Beschichtungsschicht ist, wobei das keramische Material insbesondere aus einem Lanthanmanganit der Formel La₁₋ₓSrₓMO₃ mit M (Übergangsmetalle) = Nickel (Ni), Eisen (Fe), Kobalt (Co), Mangan (Mn), Chrom (Cr), allein oder gemischt, oder Materialien mit Lamellenstruktur wie Lanthanid-Nickelate der Formel Ln₂NiO₄ (Ln = Lanthan (La), Neodym (Nd), Praseodym (Pr)) oder einem anderen elektrisch leitenden Perovskitoxid ausgewählt ist.

15. Zwischenverbinder nach einem der vorhergehenden Ansprüche, **dadurch gekennzeichnet, dass** die zweite Beschichtungsschicht eine dicke metallische Beschichtungsschicht ist, wobei das metallische Material insbesondere aus Nickel (Ni) und seinen Legierungen oder chrombildenden Legierungen ausgewählt ist, deren Basiselement Eisen (Fe) ist.

16. Stapel (20) von hochtemperaturbetriebenen Festoxidzellen vom Typ SOEC/SOFC, umfassend eine Vielzahl von elektrochemischen Zellen (1), die jeweils aus einer Kathode, einer Anode und einem zwischen Kathode und Anode eingefügten Elektrolyten gebildet sind, und eine Vielzahl von Zwischenverbindern (5) nach einem der vorhergehenden Ansprüche, die jeweils zwischen zwei benachbarten elektrochemischen Zellen (1) angeordnet sind.

## Claims

1. An interconnector (5) for a stack (20) of solid oxide cells of the SOEC/SOFC type operating at high temperature, intended to be arranged between two adjacent electrochemical cells (1) of the stack (20), each electrochemical cell (1) being formed of a cathode, an anode and an electrolyte interposed between the cathode and the anode, the interconnector (5) being formed by the assembly of at least three plates (21, 22, 23) elongate along a first axis of symmetry (X) and a second axis of symmetry (Y) orthogonal to each other, a central plate (22) being interposed between a first end plate (21) and a second end plate (23), the central plate (22) comprising a central part (70) and, at its periphery, at least two holes (71, 73) elongate over a length substantially corresponding to the length of the central part (70) along the first axis of symmetry (X) and two holes (72, 74) elongate over a length substantially corresponding to the length of the central part (70) along the second axis of symmetry (Y), each hole (71, 72, 73, 74) comprising tabs (710, 720, 730, 740) spaced apart from each other to form a comb and slots (711) defined between the edge of a hole (71) and a tab (710) or between two successive tabs (711),
**characterised in that** the width (lₑ) of each tab (710) of at least one hole (71) is between 0.1 mm and 3 mm, especially in the order of 1 mm,
the interconnector (5) comprising a metal alloy substrate having two main planar faces, one of the main planar faces comprising a first coating layer forming a first contact layer with an electrochemical cell (1), the other of the main planar faces comprising a second coating layer forming a second contact layer with an electrochemical cell (1),
the first coating layer and/or the second coating layer comprising a planar face (P) and relief elements (10a, 10b, 10c) formed thereon.

2. The interconnector according to claim 1, **characterised in that** the width (l_{f}) of each slot (711) of at least one hole (71) is between 3 and 5 mm, especially in the order of 4.9 mm.

3. The interconnector according to claim 1 or 2, **characterised in that** the height (hₑ) of each tab (710) of at least one hole (71) is between 0.25 and 1 mm, especially in the order of 0.3 mm.

4. The interconnector according to one of the preceding claims, **characterised in that** the interconnector (5), especially the central part (70) of the central plate (22), comprises a planar face (P) on which at least one first group of first identical relief elements (10a) with respect to the planar face (P) and a second group of second identical relief elements (10b) with respect to the planar face (P) are formed,
the first relief elements (10a) having different geometric characteristics with respect to the second relief elements (10b),
the height (H1) of each first relief element (10a), measured as the largest vertical dimension of the first relief element (10a) with respect to the planar face (P), being different from the height (H2) of each second relief element (10b), measured as the largest vertical dimension of the second relief element (10b),
the contact width (D1) of each first relief element (10a), measured as the largest horizontal dimension with respect to the planar face (P) of the outer contact end (10ae) of each first relief element (10a), opposite the inner end (10ai) in contact with the planar face (P) and intended to be in contact with an electrochemical cell (1), being different from the contact width (D2) of each second relief element (10b), measured as the largest horizontal dimension with respect to the planar face (P) of the outer contact end (10be) of each second relief element (10b), opposite the inner end (10bi) in contact with the planar face (P) and intended to be in contact with an electrochemical cell (1).

5. The interconnector according to claim 4, **characterised in that** the first relief elements (10a) have a contact width (D1) greater than the contact width (D2) of the second relief elements (10b), the first relief elements (10a) being located in line with the tabs (710) of at least one hole (71) and the second relief elements (10b) being located in line with the slots (711) of said at least one hole (71).

6. The interconnector according to claim 5, **characterised in that** the contact width (D1) of the first relief elements (10a) is equal to the width (lₑ) of the tabs (710) of said at least one hole (71).

7. The interconnector according to any one of claims 4 to 6, **characterised in that** the contact width (D1) of each first relief element (10a) is between 0.5 and 5 mm, preferably equal to 1 mm, **in that** the contact width (D2) of each second relief element (10b) is between 0.005 mm and 0.5 mm, preferably equal to 100 µm, **in that** the height (H1) of each first relief element (10a) is between 200 µm and 1000 µm, preferably equal to 350 µm, and **in that** the height (H2) of each second relief element (10b) is between 250 µm and 1050 µm, preferably equal to 400 µm.

8. The interconnector according to any one of claims 4 to 7, wherein the difference between the height (H2) of each second relief element (10b) and the height (H1) of each first relief element (10a) is between 5 µm and 500 µm, especially in the order of 50 µm.

9. The interconnector according to any one of claims 4 to 8, **characterised in that** it comprises a number N, where N is an integer greater than or equal to 2, preferably between 2 and 50, more preferably equal to 5, of groups of relief elements (10a, 10b, 10c), formed on the planar face (P), the relief elements (10a; 10b; 10c) of a same group all being all identical, and the relief elements (10a, 10b, 10c) of different groups having different geometric characteristics, namely different heights (H1, H2, H3) and different contact widths (D1, D2, D3).

10. The interconnector according to any one of claims 4 to 9, **characterised in that** the relief elements (10a, 10b, 10c) are in the form of teeth or grooves, disposed in parallel to each other, the spaces between the relief elements (10a, 10b, 10c) forming gas circulation channels (11).

11. The interconnector according to any one of claims 4 to 9, **characterised in that** the relief elements (10a, 10b, 10c) are in the form of pads, especially of cylindrical shape, the spaces between the relief elements (10a, 10b, 10c) forming a single coiled gas circulation channel (11).

12. The interconnector according to any one of claims 4 to 11, **characterised in that** the relief elements (10c) having the largest width (D3) are located at the periphery (Pi) of the planar face (P), at a distance from the other relief elements (10a, 10b) and from the gas circulation channel(s) (11) formed by the spaces between the other relief elements (10a, 10b).

13. The interconnector according to any one of the preceding claims, **characterised in that** the metal alloy substrate is of the chromia-forming type, the base element of which is iron (Fe) or nickel (Ni), and **in that** the relief elements (10a, 10b, 10c) formed on the planar face (P) are formed by machining.

14. The interconnector according to any one of the preceding claims, **characterised in that** the first coating layer is a thick, porous or not, ceramic coating layer, the ceramic material being especially chosen from lanthanum manganite of the formula La₁₋ₓSrₓMO₃ where M (transition metals) = Nickel (Ni), Iron (Fe), Cobalt (Co), Manganese (Mn), Chromium (Cr), alone or in a mixture, or lamellar structure materials such as lanthanide nickelates of the formula Ln₂NiO₄ (Ln = Lanthanum (La), Neodymium (Nd), Praseodymium (Pr)), or another electrically conductive perovskite oxide.

15. The interconnector according to any one of the preceding claims, **characterised in that** the second coating layer is a thick metal coating layer, the metal material being especially chosen from Nickel (Ni) and alloys thereof or chromia-forming alloys, the base element of which is Iron (Fe).

16. A stack (20) of SOEC/SOFC type solid oxide cells operating at high temperature, comprising a plurality of electrochemical cells (1) each formed of a cathode, an anode and an electrolyte interposed between the cathode and the anode, and a plurality of interconnectors (5) according to any one of the preceding claims, each arranged between two adjacent electrochemical cells (1).
